# EUROPÄISCHE PATENTSCHRIFT

(11) **EP 1 583 943 B1**
(45) Veröffentlichungstag und Bekanntmachung des Hinweises auf die Patenterteilung: **10.03.2010**
(21) Anmeldenummer: 04702704.0
(22) Anmeldetag: 16.01.2004
(51) Int. Cl.: G01L 1/22, G01L 5/10, G01L 5/00

(54) **KRAFTAUFNEHMER ZUM MESSEN VON ACHSKRÄFTEN**
FORCE TRANSDUCER FOR MEASURING AXIAL FORCES
CAPTEUR DE FORCES POUR LA MESURE DE FORCES AXIALES

(30) Priorität: 16.01.2003 DE 10302349
(43) Veröffentlichungstag der Anmeldung: 12.10.2005
(73) Patentinhaber: EBM Brosa Messgeräte GmbH & Co.KG, 88069 Tettnang (DE)
(72) Erfinder: PFEFFER, Otto, 88069 Tettnang (DE)
(74) Vertreter: Wegener, Markus
(86) Internationale Anmeldenummer: PCT/EP2004/000305
(87) Internationale Veröffentlichungsnummer: WO 2004/063690

(56) Entgegenhaltungen:
- EP-A- 0 374 498
- WO-A-02/08712
- US-A- 4 165 637
- US-B1- 6 370 971

## Beschreibung

Die Erfindung betrifft einen Kraftaufnehmer zum Messen von Achskräften, die im Wesentlichen quer auf eine Achse wirken, insbesondere eine Messachse, mit einem sich längs erstreckenden Achskörper, der einen eine Krafteinleitungszone bildenden ersten Abschnitt, zumindest einen eine Lagerzone zum Lagern des Kraftaufnehmers in einer Aufnahme bildenden zweiten Abschnitt und zumindest einen eine Kraftmesszone zum Messen der Achskräfte bildenden dritten Abschnitt aufweist.

Ein derartiger Kraftaufnehmer ist allgemein bekannt, z.B. aus US-A-4 165 637.

Ein Kraftaufnehmer der eingangs genannten Art wird dazu verwendet, Kräfte zu messen, die im Wesentlichen quer auf eine Achse oder Welle drehender Teile von Maschinen oder Anlagen wirken. Derartige Achskräfte können in einer rein radial auf die Achse wirkenden Kraft oder in einer Torsionskraft bestehen. Beispielsweise wird ein derartiger Kraftaufnehmer zum Messen von Achskräften bei Seilrollen verwendet, beispielsweise in Seilbahnen. Die Messung von Achskräften dient bei diesem Anwendungsfall insbesondere der Erfassung von Überbelastungen der Seilrollen, um Gefahrenzustände rechtzeitig erkennen zu können.

Herkömmliche Kraftaufnehmer der eingangs genannten Art weisen einen sich längs erstreckenden Achskörper auf, der im Wesentlichen einstückig und massiv ausgebildet ist. Der Achskörper ist üblicherweise hinsichtlich seiner Dimensionierung und Stärke auf den jeweiligen Anwendungsfall ausgelegt, und er muss auch eine entsprechende Dauerfestigkeit in Bezug auf Lastwechsel besitzen.

Der Achskörper weist allgemein eine Krafteinleitungszone auf. Unter der Krafteinleitungszone wird derjenige Abschnitt des Achskörpers verstanden, in dem die zu messende Kraft in den Kraftaufnehmer eingeleitet wird. Im Beispielfall der Anwendung des Kraftaufnehmers zum Messen von Achskräften in einer Seilrolle ist die Krafteinleitungszone des Achskörpers derjenige axiale Bereich, an dem die Seilrolle direkt oder indirekt gelagert ist.

Der Achskörper weist weiterhin zumindest eine, üblicherweise zwei Kraftmesszonen auf, die üblicherweise axial außerhalb der Krafteinleitungszone angeordnet ist bzw. sind. In der zumindest einen Kraftmesszone bzw. in den zumindest zwei Kraftmesszonen ist jeweils zumindest ein Kraftmesssystem angeordnet. Das Kraftmesssystem kann Scherkräfte, Dehnungen und Stauchungen im Achskörper erfassen und wandelt diese in messbare Signale, üblicherweise elektrische Signale, zur Ermittlung der Kraft um. Beispielsweise weist das oder weisen die Kraftmesssysteme Dehnungsmessstreifen auf, die eine Kraftmessung über Widerstandsänderungen innerhalb einer oder mehrerer Brückenschaltungen ermöglichen. Es können jedoch auch andere Kraftmesssysteme zum Einsatz kommen, die auf anderen physikalischen Prinzipien der Krafterfassung beruhen.

Kraftaufnehmer zum Messen von Achskräften werden üblicherweise zu ihrem Einsatzzweck in eine Art Aufnahmegabel oder Aufnahme bzw. Lager eingelegt, wie dies beispielsweise im Anwendungsfall des Kraftaufnehmers zum Messen von Achskräften in einer Seilrolle der Fall ist. Entsprechend weist der Achskörper axial außerhalb der Krafteinleitungszone zumindest eine, üblicherweise zwei Lagerzonen zum direkten oder indirekten Lagern des Kraftaufnehmers in einer Aufnahme auf. Die zumindest eine Lagerzone wird im Einsatzfall der Messachse mit Kräften beaufschlagt, die den auf die Krafteinleitungszone wirkenden Kräften entgegengesetzt gerichtet sind. Die zumindest eine Lagerzone wirkt somit als Widerlager zur Krafteinleitungszone.

Bei herkömmlichen Kraftaufnehmern zeigen sich im praktischen Einsatz Hystereseeffekte bei der Kraftmessung. Als Hysterese oder auch Umkehrspanne bezeichnet man den unterschiedlichen Verlauf der Kennlinie bei zu- und abnehmender Belastung. Die Hysterese wird durch Reibungseffekte verursacht, die bei den Verformungen des Kraftaufnehmers an den Kontaktstellen mit anderen Teilen entstehen. Konkret treten diese Reibungseffekte an den Kontaktstellen des Kraftaufnehmers im Bereich seiner zumindest einen Lagerzone mit der Aufnahme auf, in der der die zumindest eine Lagerzone bildende Abschnitt des Achskörpers gelagert ist. Bei einer Krafteinleitung biegt sich nämlich der Kraftaufnehmer im Bereich zwischen den Aufnahmen, d.h. zwischen den Lagerzonen, wenn auch nicht mit dem Auge erfassbar, d.h. im Millimeter- oder Submillimeterbereich, durch. Wird der Kraftaufnehmer ausgehend vom unbelasteten Zustand mit hoher Kraft belastet und anschließend wieder entlastet, bewirken diese zuvor genannten Reibungskräfte, dass der Kraftaufnehmer beim Nachlassen der Kraft auf Grund der hohen Reibungskräfte in einem verspannten Zustand verharrt, d.h. nicht elastisch in einen der tatsächlichen eingeleiteten Kraft entsprechenden Zustand relaxiert. Dies hat zur Folge, dass das zumindest eine Kraftmesssystem momentan eine scheinbar höhere Kraft detektiert, als es der tatsächlich eingeleiteten Kraft entspricht. Die Kraftmessung wird somit durch parasitäre oder Scheinkräfte beeinflusst, was jedoch eine möglichst genaue Kraftmessung verhindert.

Derartige Scheinkräfte können auch dann auftreten, wenn der Kraftaufnehmer in nicht exakt miteinander fluchtende Lager eingebaut wird. Beim Einbauen des Kraftaufnehmers kann es dabei zu Verspannungen des Kraftaufnehmers kommen, die von der Kraftmesseinrichtung bzw. den Kraftmesseinrichtungen erfasst werden, ohne dass es sich hierbei um eine Achskraft handelt, die tatsächlich gemessen werden soll. Hierbei ist zu berücksichtigen, dass Kraftmesseinrichtungen auf der Basis von Dehnungsmessstreifen bereits auf Scherungen, Dehnungen und Stauchungen im Submillimeterbereich ansprechen und dass Fertigungstoleranzen der Aufnahmelager, in die die Kraftaufnehmer eingebaut werden, zumindest ebenfalls in dieser Größenordnung liegen.

Der Erfindung liegt daher die Aufgabe zugrunde, einen Kraftaufnehmer der eingangs genannten Art dahingehend weiterzubilden, dass die Messgenauigkeit des Kraftaufnehmers verbessert wird.

Erfindungsgemäß wird diese Aufgabe hinsichtlich des eingangs genannten Kraftaufnehmers dadurch gelöst, dass der Achskörper im Bereich des zumindest einen zweiten Abschnitts von der Außenseite desselben radial beabstandet zumindest eine sich in Umfangsrichtung erstreckende und im Wesentlichen axial gerichtete Ausnehmung aufweist, so dass ein dem ersten Abschnitt zugewandter Rand des zweiten Abschnitts einen freien Überhang bildet.

Der Achskörper des erfindungsgemäßen Kraftaufnehmers weist demnach im Bereich des zumindest einen zweiten Abschnitts, der die zumindest eine Lagerzone des Kraftaufnehmers bildet, eine Ausnehmung in Form eines Einstichs auf. Hierdurch wird die Wirkung erzielt, dass der Kontaktbereich des Achskörpers mit der Aufnahme, in der der Kraftaufnehmer gelagert ist, von dem übrigen Achskörper und damit insbesondere von dem die Kraftmesszone bildenden Abschnitt des Achskörpers entkoppelt ist, wodurch parasitäre Kräfte bzw. Scheinkräfte, wie durch in den Kontaktbereichen auftretende Reibungskräfte, keinen störenden Einfluss auf die tatsächliche Kraftmessung haben. Es werden vielmehr nur die tatsächlich zu messenden Achskräfte vom zumindest einen Kraftmesssystem erfasst. Der dem ersten Abschnitt, d.h. der Krafteinleitungszone, zugewandte Rand des die Lagerzone bildenden zweiten Abschnitts besitzt nämlich auf Grund der erfindungsgemäßen Ausgestaltung eine gewisse Relativbeweglichkeit zum übrigen Achskörper und bildet eine Art "Gelenk", wenn sich der Achskörper bei einer Krafteinleitung im Millimeter- oder Submillimeterbereich durchbiegt. Entsprechend ist eine solche Relativbewegung im Submillimeterbereich bereits ausreichend, um Messfehler deutlich zu vermindern. Verspannungen des Kraftaufnehmers auf Grund einer mit Toleranzen behafteten Einbausituation oder auf Grund von hohen Reibungskräften im Bereich der Lagerzone übertragen sich somit im Wesentlichen nicht auf den Achskörper und das damit verbundene Kraftmesssystem und können sich somit nicht auf die Genauigkeit der Kraftmessung negativ auswirken. Damit wird vorteilhafterweise eine Hysterese in der Kraftmessung reduziert.

In einer bevorzugten Ausgestaltung ist der zumindest eine dritte Abschnitt, der die Kraftmesszone bildet, zwischen dem ersten und dem zweiten Abschnitt angeordnet oder überlappt mit dem zumindest einen zweiten Abschnitt zumindest teilweise oder fällt mit diesem zusammen.

Diese Maßnahme hat den Vorteil, dass die zuvor beschriebene "Gelenkigkeit" zwischen der Lagerzone und dem übrigen Achskörper sich in unmittelbarer Nähe zur Kraftmesszone des Achskörpers befindet, wodurch sich auf Grund parasitärer Kräfte wie Reibungskräfte ergebende Verspannungen am wenigsten auf die tatsächliche Kraftmessung auswirken, bzw. solche parasitäre Kräfte optimal von der Kraftmesszone entkoppelt sind.

In einer weiteren bevorzugten Ausgestaltung erstreckt sich die Ausnehmung über einen vollen Umfang von 360° an dem Achskörper.

Diese Ausgestaltung ist insbesondere bei einer vollumfänglichen Lagerung des Kraftaufnehmers in einer Aufnahme von Vorteil, da in einem solchen Fall sich der Kontaktbereich zwischen der Außenseite des Kraftaufnehmers und der Aufnahme ebenfalls vollumfänglich erstreckt und stets eine optimale Entkopplung solcher Kontaktbereiche von der Kraftmesszone erreicht wird, in dem Sinne, dass sich parasitäre oder Scheinkräfte wie Reibungskräfte und Verspannungen auf die Kraftmessung nicht negativ auswirken.

In einer weiteren bevorzugten Ausgestaltung weist der Achskörper im Übergang von dem ersten Abschnitt zu dem zumindest einen zweiten Abschnitt einen Abschnitt mit geringerem Durchmesser als der erste und zweite Abschnitt auf, an den sich die zumindest eine Ausnehmung anschließt.

Diese Maßnahme trägt weiterhin zu einer verbesserten Entkopplung des Kontaktbereiches des Kraftaufnehmers mit der Aufnahme, in der der Kraftaufnehmer gelagert ist, von der Kraftmesszone bei, weil durch den durchmessergeringeren Abschnitt die "Gelenkigkeit" des Achskörpers im Bereich der Lagerzone noch weiter erhöht wird. Des Weiteren ermöglicht es diese Ausgestaltung, den überhängenden Rand des die Lagerzone bildenden zweiten Abschnitts mit einer noch ausreichenden Materialdicke zu versehen, um so eine entsprechende geforderte Stabilität des Kraftaufnehmers im Bereich der Lagerzone zu gewährleisten.

In diesem Zusammenhang ist es bevorzugt, wenn sich der durchmessergeringere Abschnitt zum zweiten Abschnitt hin verjüngt.

In diesem Fall schließt sich die Ausnehmung vorzugsweise mit dem verjüngungswinkel des durchmessergeringeren Abschnitts stetig bzw. mit gleichem Winkel an, wodurch sich die Ausnehmung etwa schräg zur Längsachse des Achskörpers erstreckt, was ebenfalls unter "im Wesentlichen axial" zu verstehen ist. Auf diese Weise wird die erwünschte Entkopplung des die Lagerzone bildenden zweiten Abschnitts von dem übrigen Achskörper weiterhin gewährleistet, während der Rand des die Lagerzone bildenden zweiten Abschnitts noch eine genügende Stärke aufweist, um sich im Einsatzfall des Kraftaufnehmers bei Messung hoher Kräfte nicht zum Achskörper hin verbiegt.

In einer weiteren bevorzugten Ausgestaltung fällt der die Kraftmesszone bildende dritte Abschnitt mit dem durchmessergeringeren Abschnitt zusammen.

Diese Maßnahme hat den Vorteil, dass eine besonders empfindliche Kraftmessung ermöglicht wird, da sich im Bereich des durchmessergeringeren Abschnitts Dehnungen, Stauchungen und Scherungen am stärksten auswirken. Des Weiteren wird auf diese Weise eine optimale Entkopplung zwischen parasitären oder Scheinkräften und der Kraftmesszone erreicht, da in diesem Bereich sich auch der freie Rand der Lagerzone befindet.

In einer weiteren bevorzugten Ausgestaltung erstreckt sich die Ausnehmung axial etwa 2 bis 10 mm tief in die Lagerzone hinein.

Die Dimensionierung der axialen Tiefe der Ausnehmung wird sich an der Dimensionierung des Achskörpers in Abhängigkeit der zu messenden Maximalkraft orientieren, und zwar im Sinne einer möglichst wirksamen Entkopplung zwischen dem Kontaktbereich der Lagerzone des Achskörpers von der Kraftmesszone.

In einer weiteren bevorzugten Ausgestaltung weist der Achskörper zumindest zwei jeweils eine Lagerzone bildende zweite Abschnitte auf, die beidseits des ersten Abschnitts angeordnet sind, wobei der Achskörper im Bereich beider zweiter Abschnitte von der Außenseite derselben radial beabstandet jeweils zumindest eine sich in Umfangsrichtung erstreckende und im Wesentlichen axial gerichtete Ausnehmung aufweist, so dass ein jeweiliger dem ersten Abschnitt zugewandter Rand der zweiten Abschnitte einen freien Überhang bildet.

Wie bereits erwähnt, werden solche Kraftaufnehmer zum Messen von Achskräften üblicherweise in zwei beidseits der Krafteinleitungszone vorhandenen Aufnahmen gelagert, so dass die vorstehend genannte Maßnahme den Vorteil hat, dass beide Lagerzonen des Kraftaufnehmers von der Kraftmesszone entkoppelt sind, was insbesondere dann von Vorteil ist, wenn beidseits der Krafteinleitungszone aus Redundanzgründen jeweils eine Kraftmesszone mit entsprechender Anzahl von Kraftmesssystemen am Achskörper vorhanden ist.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel ist in der Zeichnung dargestellt und wird mit Bezug auf diese hiernach näher beschrieben. Es zeigen:
- Fig. 1: eine Seitenansicht eines Kraftaufnehmers zum Messen von Achskräften in einer beispielhaften Einbausituation bei einer Seilrolle, die teilweise im Schnitt dargestellt ist;
- Fig. 2: den Kraftaufnehmer in Fig. 1 in Alleinstellung mit einer teilweisen Aufbrechung, die ein Detail des Kraftaufnehmers zeigt; und
- Fig. 3: eine vergrößerte Darstellung des Ausschnitts X in Fig. 2.

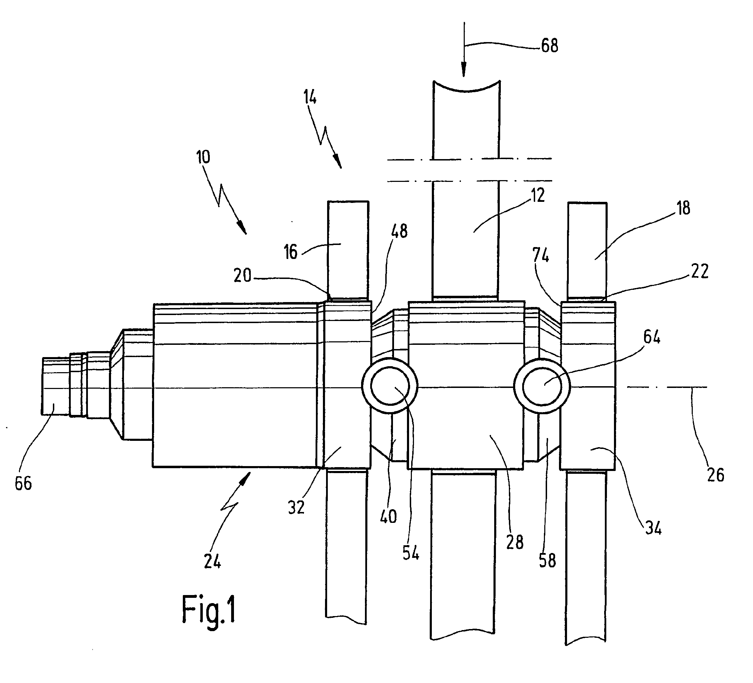

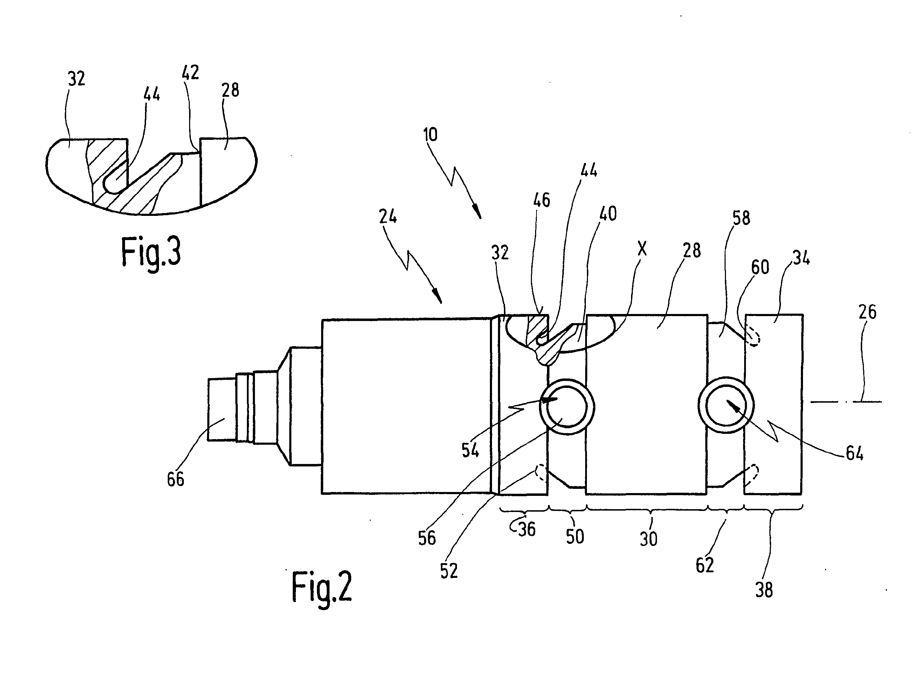

In Fig. 1 und 2 ist ein mit dem allgemeinen Bezugszeichen 10 versehener Kraftaufnehmer zum Messen von Achskräften, die im Wesentlichen quer auf eine Achse wirken, dargestellt. Der Kraftaufnehmer 10 wird auch als Messachse bezeichnet.

In Fig. 1 ist der Kraftaufnehmer 10 beispielhaft in einer Einbaulage als Messachse für eine Seilrolle 12 dargestellt. Mittels des Kraftaufnehmers 10 sollen die durch das nicht dargestellte Seil auf die Messachse 10, die die Achse der Seilrolle 12 bildet, im Wesentlichen quer zur Messachse 10 wirkenden Achskräfte, die auch in Torsionskräften bestehen können, gemessen werden.

Wie in Fig. 1 dargestellt ist, ist der Kraftaufnehmer 10 in einer Aufnahme 14 in der Art einer Aufnahmegabel, die zwei Schenkel 16 und 18 aufweist, in darin vorgesehenen Bohrungen 20 und 22 festgelegt.

Weiter mit Bezug auf Fig. 2 weist der Kraftaufnehmer 10 einen Achskörper 24 auf, der im Wesentlichen einteilig und einstückig und massiv ausgebildet ist.

Der Achskörper 24 weist allgemein eine im Wesentlichen zylindrische Rotationssymmetrie um eine Längsachse 26 auf.

Der sich längs erstreckende Achskörper 24 weist einen ersten Abschnitt 28 auf, der eine Krafteinleitungszone 30 bildet.

Beidseits des ersten Abschnitts 28 weist der Achskörper 24 zwei zweite Abschnitte 32 und 34 auf, die eine Lagerzone 36 bzw. 38 bilden.

Der erste Abschnitt 28 und die zweiten Abschnitte 32 und 34 weisen einen im Wesentlichen gleichen Außendurchmesser auf.

Zwischen dem ersten Abschnitt 28 und dem zweiten Abschnitt 32 weist der Achskörper 24 einen Abschnitt 40 auf, der einen geringeren Durchmesser aufweist als der erste Abschnitt 28 und der zweite Abschnitt 32. Der Abschnitt 40 bildet einen Übergang von dem ersten Abschnitt 28 zu dem zweiten Abschnitt 32. Der durchmessergeringere Abschnitt 40 geht in den ersten Abschnitt 28 mit einer Rundung 42 über, um bei einer Kraftbelastung des Kraftaufnehmers 10 quer zur Längsachse 26 Kerbwirkungen, die Sollbruchstellen darstellen können, zu vermeiden.

Im Bereich des zweiten Abschnitts 32 weist der Achskörper 24 eine Ausnehmung 44 in Form eines Einstichs auf, die von einer Außenseite 46 des Achskörpers 24 radial beabstandet ist, so dass ein dem ersten Abschnitt 28 zugewandter Rand 48 des zweiten Abschnitts 32 einen freien Überhang bildet. Die Ausnehmung 44 ist an ihrem dem ersten Abschnitt 28 zugewandten Ende entsprechend offen, wie aus Fig. 2 und insbesondere aus Fig. 3 hervorgeht, in der die Ausnehmung 44 vergrößert dargestellt ist.

Die Ausnehmung 44 ist im Wesentlichen axial gerichtet, im gezeigten Ausführungsbeispiel schräg zur Längsachse 26 des Achskörpers.

Die Ausnehmung 44 erstreckt sich über einen vollen Umfang von 360° an dem Achskörper 24.

Die Ausnehmung 44 erstreckt sich axial etwa 2 bis 10 mm tief in den die Lagerzone 36 bildenden zweiten Abschnitt 32 hinein, wobei die Tiefe der Ausnehmung 44 von der Dimensionierung des Achskörpers 24 und der mit diesem zu messenden Maximalkraft abhängen wird.

Der durchmessergeringere Abschnitt 40 bildet gleichzeitig einen dritten Abschnitt des Achskörpers 24, der eine Kraftmesszone 50 des Achskörpers 24 bildet. Der Abschnitt 40, der demnach gleichzeitig die Kraftmesszone 50 bildet, verjüngt sich gemäß Fig. 2 und 3 zum zweiten Abschnitt 32 hin, wobei die Ausnehmung 44 sich an die Verjüngung mit gleichem Verjüngungswinkel anschließt.

Ein inneres Ende 52 der Ausnehmung 44 ist abgerundet ausgebildet, um auch hier eine Kerbwirkung zu vermeiden.

In dem die Kraftmesszone 50 bildenden Abschnitt 40 ist ein nicht näher dargestelltes Kraftmesssystem 54 angeordnet. Das Kraftmesssystem 54 ist beispielsweise auf der Basis von Dehnungsmessstreifen (DMS) ausgebildet, wobei die DMS in einer Sacklochbohrung in dem Abschnitt 40 des Achskörpers 24 eingebettet und mit dem Achskörper 24 fest verbunden ist. Diese die DMS aufnehmende Sacklochbohrung ist nach außen hin mit einem Deckel 56 hermetisch dicht verschweißt, damit das Kraftmesssystem 54 vor Umwelteinflüssen geschützt ist.

Auf der dem zweiten Abschnitt 32 gegenüberliegenden Seite des ersten Abschnitts 28 ist ein weiterer durchmessergeringerer Abschnitt 58 angeordnet, der den Übergang von dem ersten Abschnitt 28 zu dem zweiten Abschnitt 34 bildet. Im Bereich des zweiten Abschnitts 34 weist der Achskörper 24 eine weitere Ausnehmung 60 auf, die spiegelsymmetrisch zur Ausnehmung 44 angeordnet und ausgebildet ist, ebenso wie der weitere durchmessergeringere Abschnitt 58, so dass diesbezüglich auf die Beschreibung der Ausnehmung 44 und des durchmessergeringeren Abschnitts 40 verwiesen werden kann.

Der durchmessergeringere Abschnitt 58 bildet eine weitere Kraftmesszone 62, in der ein nicht näher dargestelltes Kraftmesssystem 64 zwecks Redundanz der Kraftmessung angeordnet ist.

Die Kraftmesssysteme 54 und 64 sind in der Lage, auf Spannungen, Dehnungen und Scherungen des Materials des Achskörpers 24 im Bereich der Abschnitte 40 und 58 in Folge der zu messenden Achskräfte durch eine Widerstandsänderung zu reagieren und ein entsprechendes elektrisches Signal zu erzeugen. Dazu ist an dem Kraftaufnehmer 10 ein Anschluss 60 zum Anschließen eines elektrischen Versorgungs- und Signalübertragungskabels (nicht dargestellt) vorhanden, wobei zur Herstellung der elektrischen Verbindung mit den Kraftmesssystemen 54 und 64 nicht näher dargestellte Bohrungen bzw. Kanäle im Achskörper 24 für Stromleitungen vorhanden sind.

Der Achskörper 24 ist im Wesentlichen einstückig gefertigt und besitzt keine Hülsen oder Abdeckungen, wenn er, wie in Fig. 1 dargestellt ist, zur Messung von Achskräften beispielsweise der Seilrolle 12 in die Aufnahme 14 eingebaut ist.

In Fig. 1 ist mit einem Pfeil 68 beispielhaft die Richtung der Krafteinleitung der Seilrolle 12 auf den Kraftaufnehmer 10 dargestellt. Die Schenkel 16 und 18, in denen der Kraftaufnehmer 10 mit seinen Abschnitten 32 und 34 gelagert ist, stellen Widerlager für die Krafteinleitung in die Krafteinleitungszone 30 dar. Auf die Abschnitte 32 und 34 des Achskörpers 24 wirken entsprechend bei einer Krafteinleitung gemäß dem Pfeil 68 Gegenkräfte, die im Sinne eines Widerlagers in Richtung von Pfeilen 70 und 72 gerichtet sind.

Bei einer Krafteinleitung in Richtung des Pfeils 68 auf den Kraftaufnehmer 10 biegt sich der Achskörper 24 im Millimeter- bzw. Submillimeterbereich durch, wobei auf Grund der Ausnehmungen 44 und 60 der erste Abschnitt 28 eine Relativbewegung zu den zweiten Abschnitten 32 und 34 im Millimeter- bzw. Submillimeterbereich ausführen kann. Diese Relativbeweglichkeit bewirkt, dass trotz der Reibungskräfte, die auf die Abschnitte 32 und 34 in den Bohrungen 20 und 22 der Schenkel 16 und 18 der Aufnahme 14 wirken, der Achskörper 24 bei nachlassender Krafteinleitung in einen Zustand relaxieren kann, der der eingeleiteten Kraft tatsächlich entspricht. Die Reibungskräfte wirken sich somit nicht parasitär auf die Kraftmesszonen 50 und 62 bzw. die Abschnitte 40 und 58, in denen die Kraftmessung erfolgt, aus.

In einer Modifikation des gezeigten Ausführungsbeispiels könnte der Rand 48 des zweiten Abschnitts 32 bzw. der gegenüberliegende Rand 74 des zweiten Abschnitts 34 geschlitzt sein, wobei unter solchen Schlitzen jedoch keine Ausnehmung im Sinne der Ausnehmungen 44 und 60 zu verstehen ist.

## Patentansprüche

1. Kraftaufnehmer zum Messen von Achskräften, die im wesentlichen quer auf eine Achse wirken, insbesondere Messachse, mit einem sich längs erstreckenden Achskörper (24), der einen eine Krafteinleitungszone (30) bildenden ersten Abschnitt (28), zumindest einen eine Lagerzone (36, 38) zum Lagern des Kraftaufnehmers (10) in einer Aufnahme (14) bildenden zweiten Abschnitt (32, 34) und zumindest einen eine Kraftmesszone (50, 62) zum Messen der Achskräfte bildenden zwischen dem ersten und zweiten Abschnitt (28, 32, 34) angeordneten dritten Abschnitt (40, 58) mit geringerem Durchmesser als der erste und zweite Abschnitt (28, 32, 34) aufweist, **dadurch gekennzeichnet, dass** der Achskörper (24) im Bereich des zumindest einen zweiten Abschnitts (32, 34) von der Außenseite (46) desselben radial beabstandet zumindest eine sich in Umfangsrichtung erstreckende und im Wesentlichen axial gerichtete Ausnehmung (44, 60) aufweist, so dass ein dem ersten Abschnitt (28) zugewandter Rand (48, 74) des zweiten Abschnitts (32, 34) einen freien Überhang bildet, wobei sich die Ausnehmung (44, 60) an den dritten Abschnitt (40, 58) anschließt.

2. Kraftaufnehmer nach Anspruch 1, **dadurch gekennzeichnet, dass** sich die Ausnehmung (44, 60) über einen vollen Umfang von 360° an dem Achskörper (24) erstreckt.

3. Kraftaufnehmer nach Anspruch 1 oder 2, **dadurch gekennzeichnet, dass** sich der durchmessergeringere dritte Abschnitt (40, 58) zum zweiten Abschnitt (32, 34) hin verjüngt.

4. Kraftaufnehmer nach einem der Ansprüche 1 bis 3, **dadurch gekennzeichnet, dass** sich die Ausnehmung (44, 60) axial etwa 2 bis 10 mm tief in die Lagerzone (36, 38) hinein erstreckt.

5. Kraftaufnehmer nach einem der Ansprüche 1 bis 4, **dadurch gekennzeichnet, dass** der Achskörper (24) zumindest zwei jeweils eine Lagerzone (36, 38) bildende zweite Abschnitte (32, 34) aufweist, die beidseits des ersten Abschnitts (28) angeordnet sind, wobei der Achskörper (24) im Bereich beider zweiter Abschnitte (32, 34) von der Außenseite (46) derselben radial beabstandet jeweils zumindest eine sich in Umfangsrichtung erstreckende und im Wesentlichen axial gerichtete Ausnehmung (44, 60) aufweist, so dass ein jeweiliger dem ersten Abschnitt (28) zugewandter Rand (48, 74) der zweiten Abschnitte (32, 34) einen freien Überhang bildet.

## Claims

1. A force transducer for measuring axial forces which act essentially transversely on an axis, in particular a measuring axis, having a longitudinally extending axial body (24), which has a first portion (28), forming a force introduction zone (30), at least one second portion (32, 34), forming a bearing zone (36, 38) for bearing the force transducer (10) in a mount (14), and at least one third portion (40, 58), forming a force measuring zone (50, 62) for measuring the axial forces and being arranged between the first and second portions (28, 32, 34), which has a smaller diameter than the first and second portions (28, 32, 34), **characterized in that** the axial body (24) has in the region of the at least one second portion (32, 34) at least one recess (44, 60) extending in the circumferential direction, being directed substantially axially, and being radially distanced to the outside (46) of the second portion, so that an edge (48, 74) of the second portion (32, 34) which is facing the first portion (28) forms a free overhang, wherein the recess (44, 60) is adjacent to the third portion (40, 58).

2. The force transducer according to Claim 1, **characterized in that** the recess (44, 60) extends over a full circumference of 360° on the axial body (24).

3. The force transducer according to Claim 1 or 2, **characterized in that** the third portion (40, 58) having a smaller diameter tapers toward the second portion (32, 34).

4. The force transducer according to one of Claims 1 to 3, **characterized in that** the recess (44, 60) extends axially into the bearing zone (36, 38) to a depth of about 2 to 10 mm.

5. The force transducer according to one of Claims 1 to 4, **characterized in that** the axial body (24) has at least two second portions (32, 34), respectively forming a bearing zone (36, 38), which are arranged on both sides of the first portion (28), the axial body (24) having in the region of both second portions (32, 34), radially at a distance from the outside of the same, in each case at least one recess (44, 60) extending in the circumferential direction and directed essentially axially, so that a respective edge (48, 74) of the second portions (32, 34) that is facing the first portion (28) forms a free overhang.

## Revendications

1. Capteur de forces pour la mesure de forces axiales, qui agissent essentiellement transversalement sur un axe, notamment un axe de mesure, comprenant un corps d'axe (24) s'étendant longitudinalement, qui présente une première portion (28) formant une zone d'introduction de force (30), au moins une deuxième portion (32, 34) formant une zone de palier (36, 38) pour supporter le capteur de forces (10) dans un logement (14) et au moins une troisième portion (40, 58) ayant un diamètre plus petit que la première et la deuxième portion (28, 32, 34) disposée entre la première et la deuxième portion (28, 32, 34), formant une zone de mesure de force (50, 62) pour mesurer les forces axiales, **caractérisé en ce que** le corps d'axe (24) présente, dans la région de l'au moins une deuxième portion (32, 34), au moins un évidement (44, 60) espacé radialement du côté extérieur (46) de celle-ci, s'étendant dans la direction périphérique et orienté essentiellement axialement, de sorte qu'un bord (48, 74) de la deuxième portion (32, 34) tourné vers la première portion (28) forme un surplomb libre, l'évidement (44, 60) se raccordant à la troisième portion (40, 58).

2. Capteur de forces selon la revendication 1, **caractérisé en ce que** l'évidement (44, 60) s'étend sur une circonférence complète de 360° sur le corps d'axe (24) .

3. Capteur de forces selon la revendication 1 ou 2, **caractérisé en ce que** la troisième portion de plus petit diamètre (40, 58) se rétrécit vers la deuxième portion (32, 34).

4. Capteur de forces selon l'une quelconque des revendications 1 à 3, **caractérisé en ce que** l'évidement (44, 60) s'étend axialement sur une profondeur d'environ 2 à 10 mm dans la zone de palier (36, 38).

5. Capteur de forces selon l'une quelconque des revendications 1 à 4, **caractérisé en ce que** le corps d'axe (24) présente au moins deux deuxièmes portions (32, 34) formant chacune une zone de palier (36, 38), qui sont disposées de chaque côté de la première portion (28), le corps d'axe (24) présentant, dans la région des deux deuxièmes portions (32, 34), à distance radialement du côté extérieur (46) de celles-ci, à chaque fois au moins un évidement (44, 60) s'étendant dans la direction périphérique et orienté essentiellement axialement, de sorte qu'un bord respectif (48, 74) des deuxièmes portions (32, 34) tourné vers la première portion (28) forme un surplomb libre.
